# EUROPÄISCHE PATENTSCHRIFT

(11) **EP 4 132 738 B1**
(45) Veröffentlichungstag und Bekanntmachung des Hinweises auf die Patenterteilung: **04.12.2024**
(21) Anmeldenummer: 21718827.5
(22) Anmeldetag: 08.04.2021
(51) Int. Cl.: B23K 26/03, B23K 26/035, B23K 26/04, B23K 26/21

(54) **VERFAHREN, BEARBEITUNGSMASCHINE UND COMPUTERPROGRAMM ZUR WERKSTÜCKLAGEERFASSUNG MITTELS OCT**
METHOD, MACHINE TOOL AND COMPUTER PROGRAM FOR SENSING A WORKPIECE POSITION BY MEANS OF OCT
PROCÉDÉ, MACHINE D'USINAGE ET PROGRAMME INFORMATIQUE DE DÉTECTION DE POSITION DE PIÈCE PAR OCT

(30) Priorität: 09.04.2020 DE 102020204622
(43) Veröffentlichungstag der Anmeldung: 15.02.2023
(73) Patentinhaber: TRUMPF Laser SE, 78713 Schramberg (DE)
(72) Erfinder: HERMANI, Jan-Patrick, 71706 Markgroeningen (DE); SPEKER, Nicolai, 74385 Pleidelsheim (DE); STAMBKE, Martin, 78655 Dunningen (DE)
(74) Vertreter: Trumpf Patentabteilung
(86) Internationale Anmeldenummer: PCT/EP2021/059212
(87) Internationale Veröffentlichungsnummer: WO 2021/204960

(56) Entgegenhaltungen:
- CN-A- 107 953 037
- DE-B3- 102015 012 565
- US-A1- 2014 276 676

## Beschreibung

Die vorliegende Erfindung betrifft ein Verfahren zum Bearbeiten eines Werkstücks mittels eines Bearbeitungsstrahls, wie z.B. eines Laserstrahls.

Bei bestimmten Anwendungen ist es nötig, die Lage, d.h. die Position und die Orientierung, eines zu bearbeitenden Werkstücks bezüglich eines Koordinatensystems zu ermitteln. Ein Beispiel einer solchen Anwendung ist die Bestimmung der Lage eines mit einem Industrieroboter zu bearbeiteten Werkstücks relativ zu dem Industrieroboter bzw. zu dessen Koordinatensystem. Die Steuerung bzw. Bahnprogrammierung bei Laserrobotern erfolgt im Stand der Technik durch Teachen. Dabei werden manuell am Werkstück, entlang der zu bearbeitenden Kontur, sogenannte Teachpunkte angefahren, indem ein im Arbeitsraum des Roboters stehender Mitarbeiter Positionen am Werkstück, Punkt für Punkt, anfährt und mit dem Auge bzw. mittels Laserpointer prüft, ob ein Laserbearbeitungskopf, aus dem bei der Laserbearbeitung ein Laserstrahl austritt, über einem Soll-Bahnpunkt steht. Auf diese Weise wird Punkt für Punkt die Bewegungsbahn des Roboters "programmiert" bzw. abgefahren, was besonders zeitaufwändig ist.

Aus der EP 2 693 165 A1 ist ein Verfahren zum Ermitteln der Lage eines Objekts mittels eines Lichtschnitt-Sensors bekannt, der ein Licht aussendet, welches eine Lichtlinie auf einer Oberfläche erzeugt. Es wird eine Suchfahrt durch automatisches Bewegen des Lichtschnitt-Sensors mit einer Bewegungskomponente rechtwinklig zur Lichtlinie und rechtwinklig zur Austrittsrichtung des Lichts mittels einer Bewegungsvorrichtung durchgeführt. Während der Suchfahrt werden Bilddaten mittels des Lichtschnitt-Sensors aufgenommen. Die Bilddaten werden ausgewertet, und aufgrund der ausgewerteten Bilddaten wird eine markante Stelle, insbesondere eine Außenkante, des Objekts erkannt. Die Lage des Objekts wird aufgrund der Position des Lichtschnitt-Sensors, die der markanten Stelle des Objekts zugeordnet ist, und aufgrund eines Auswertens der der markanten Stelle des Objekts zugeordneten Bilddaten ermittelt.

Weiterhin ist aus der DE 10 2015 114 715 A1 ein Koordinatensystem bekannt, bei dem mittels kurzkohärenter Interferometrie die Bauteilgeometrie erfasst wird.

Schließlich ist aus der DE 10 2013 015 656 A1 ein Verfahren zum Messen der Eindringtiefe eines Laserstrahls in ein Werkstück mittels eines optischen Kohärenztomographen bekannt. Eine weitere mögliche Anwendung des OCT im Bereich hochenergetische Laserbearbeitung ist aus der DE 10 2015 012 565 B3 bekannt.

Aus der CN 107 953 037 A (offenbarend den Oberbegriff der Ansprüche 1 und 5) ist ein System zur dreidimensionalen Lasergravur bekannt, welches unter Einsatz von optischer Kohärenztomographie Abstandsmessungen durchführt.

Ein Einsatz von optischer Kohärenztomographie im medizinischen Bereich der Ophthalmologie ist aus der US 2014 0 276 676 A1 bekannt.

Der Erfindung liegt demgegenüber die Aufgabe zugrunde, ein Verfahren zum Bearbeiten eines Werkstücks mittels eines Bearbeitungsstrahls anzugeben, bei dem Merkmale eines zu bearbeitenden Werkstücks bestimmt werden können. Insbesondere soll die Lage, also die Position und die Orientierung, eines zu bearbeitenden Werkstücks im Arbeitsraum automatisiert, d.h. ohne manuelles Teachen, erfasst werden können und das Werkstück dann entsprechend seiner erfassten Lage bearbeitet werden.

Diese Aufgabe wird erfindungsgemäß durch ein Verfahren zum Bearbeiten eines Werkstücks mittels eines Bearbeitungsstrahls, der aus einem Bearbeitungskopf austritt, wobei das Werkstück und der Bearbeitungskopf in einem Arbeitsraum relativ zueinander bewegbar sind, mit folgenden Verfahrensschritten:
- automatisiertes Abtasten eines im Arbeitsraum angeordneten, zu bearbeitenden Werkstücks mittels eines über den Bearbeitungskopf geführten OCT-Mess-strahls eines optischen Kohärenztomographen (englisch *optical coherence tomography*, OCT), wobei die Lage des Bearbeitungskopfes im Arbeitsraum sowie die Lage des OCT-Messstrahls relativ zum Bearbeitungskopf jeweils bekannt sind;
- Bestimmen mindestens eines der folgenden Merkmale anhand von beim automatisierten Abtasten ermittelten Abstandsmesswerten des optischen Kohärenztomographen:
   - die Lage des zu bearbeitenden Werkstücks im Arbeitsraum;
   - das Vorhandensein eines zu bearbeitenden Werkstücks im Arbeitsraum;
   - das Vorhandensein des richtigen, zu bearbeitenden Werkstücks im Arbeitsraum; und
   - das Vorhandensein eines in einem vorherigen Bearbeitungsschritt am Werkstück durchgeführten Bearbeitungsmerkmals des zu bearbeitenden Werkstücks (z.B. ob ein zuvor gefertigter Biegeradius stimmt oder nicht).

Bei der Relativbewegung von Werkstück und Bearbeitungskopf können entweder nur das Werkstück oder nur der Bearbeitungskopf oder beide bewegt werden.

Erfindungsgemäß wird das OCT-Messverfahren genutzt, um Merkmale eines zu bearbeitenden Werkstücks, wie z.B. die Werkstücklage im Arbeitsraum, automatisiert zu messen. Die OCT Messtechnik ist ein optisches Messverfahren, welches heute zur Messung der Einschweißtiefe oder zum Messen der Position von Schweißkanten verwendet wird. Da der OCT Messstrahl, insbesondere koaxial zum Bearbeitungsstrahl, über den Bearbeitungskopf geführt ist und ein Bestandteil des Bearbeitungskopfes ist, generiert das OCT Messsignal eine Abstandsinformation zu einem Bezugspunkt am Bearbeitungskopf, z.B. Tool-Center-Point, TCP. Aus der Stellung der Roboterachsen und den Abmaßen des Schweißkopfes kann die Lage des zu bearbeitenden Werkstücks im Arbeitsraum abgeleitet werden.

Besonders bevorzugt weist das erfindungsgemäße Verfahren folgende weitere Verfahrensschritte auf:
- Ermitteln einer Koordinatentransformation zwischen der bestimmten Werkstücklage und der Lage eines CAD-Modells des zu bearbeitenden Werkstücks in einem CAD-Koordinatensystem;
- Transformieren einer für das CAD-Modell im CAD-Koordinatensystem programmierten Bearbeitungsbahn des Bearbeitungskopfes auf die bestimmte Lage des zu bearbeitenden Werkstücks mittels der ermittelten Koordinatentransformation; und
- Bearbeiten des Werkstücks mittels des Bearbeitungsstrahls durch Bewegen des Bearbeitungskopfes relativ zueinander entlang der transformierten Bearbeitungsbahn.

Es findet ein Abgleich der gemessenen Werkstücklage mit der Lage des CAD-Modells des zu bearbeitenden Werkstücks im CAD-Koordinaten-system statt. Per Koordinatentransformation wird die NC-Bahnprogrammierung des Bearbeitungskopfes vom CAD-Koordinatensystem auf die gemessene Werkstücklage übertragen. Damit ergeben sich folgende Vorteile:
- Der Teachvorgang entfällt;
- zeitsparend schneller zum ersten bearbeiteten Werkstück;
- geringeres Risiko von Fehlbedienung;
- Offline-Programmierung für Roboter;
- Aufbau der Bearbeitungsmaschine wird vereinfacht, z.B. durch einfache Spannmittel, da keine exakt wiederholbare Werkstücklage benötigt wird.

Vorzugsweise wird der OCT-Messstrahl ein- oder zweidimensional abgelenkt, um das Werkstück mit dem OCT-Messstrahl abzutasten. Im Gegensatz zu Lichtschnittbasierten Verfahren kann bei dem erfindungsgemäßen OCT-basierten Verfahren eine vom OCT-Messstrahl auf der Werkstückoberfläche abgefahrene Scanfigur beliebig verändert werden kann.

Weiter bevorzugt kann der Bearbeitungskopf bewegt werden, um das Werkstück mit dem Messstrahl abzutasten.

Die Erfindung betrifft auch eine Bearbeitungsmaschine zum Bearbeiten eines Werkstücks mittels eines Bearbeitungsstrahls, insbesondere eines Bearbeitungslaserstrahls, aufweisend:
- einen Bearbeitungsstrahlerzeuger zum Erzeugen eines Bearbeitungsstrahls,
- einen optischen Kohärenztomographen zum Erzeugen eines OCT-Messstrahls,
- einen OCT-Scanner zum ein- oder zweidimensionalen Ablenken des OCT-Messstrahls,
- einen Bearbeitungskopf, aus dem der Bearbeitungsstrahl und der abgelenkte OCT-Messstrahl austreten, und
- eine Maschinensteuerung zum Steuern der Scannerbewegung des OCT-Scanners.

Erfindungsgemäß weist die Maschinensteuerung auf:
- eine Lagebestimmungseinheit zum Bestimmen der Lage des zu bearbeitenden Werkstücks im Arbeitsraum anhand von Abstandsmesswerten des optischen Kohärenztomographen,
- eine Ermittlungseinheit zum Ermitteln einer Koordinatentransformation zwischen der bestimmten Werkstücklage und der Lage eines CAD-Modells des zu bearbeitenden Werkstücks in einem CAD-Koordinatensystem,
- eine Transformationseinheit zum Transformieren einer für das CAD-Modell im CAD-Koordinatensystem programmierten Bearbeitungsbahn des Bearbeitungskopfes auf die bestimmte Lage des zu bearbeitenden Werkstücks mittels der ermittelten Koordinatentransformation,
wobei die Maschinensteuerung programmiert ist, das oben beschriebene erfindungsgemäße Verfahren auszuführen.

Der Bearbeitungskopf kann unbeweglich oder, was bevorzugt ist, bewegbar sein, wobei in letzteren Fall die Maschinensteuerung auch die Bewegung des Bearbeitungskopfes steuert. Es können entweder eine einzige Maschinensteuerung oder zwei separate Steuerungen, die miteinander kommunizieren, vorhanden sein.

Besonderes bevorzugt sind der optische Kohärenztomograph und der OCT-Scanner am Bearbeitungskopf befestigt.

Die Erfindung betrifft schließlich auch ein Computerprogrammprodukt entsprechend dem Anspruch 10.

Weitere Vorteile und vorteilhafte Ausgestaltungen des Gegenstands der Erfindung sind der Beschreibung, den Zeichnungen und den Ansprüchen entnehmbar. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

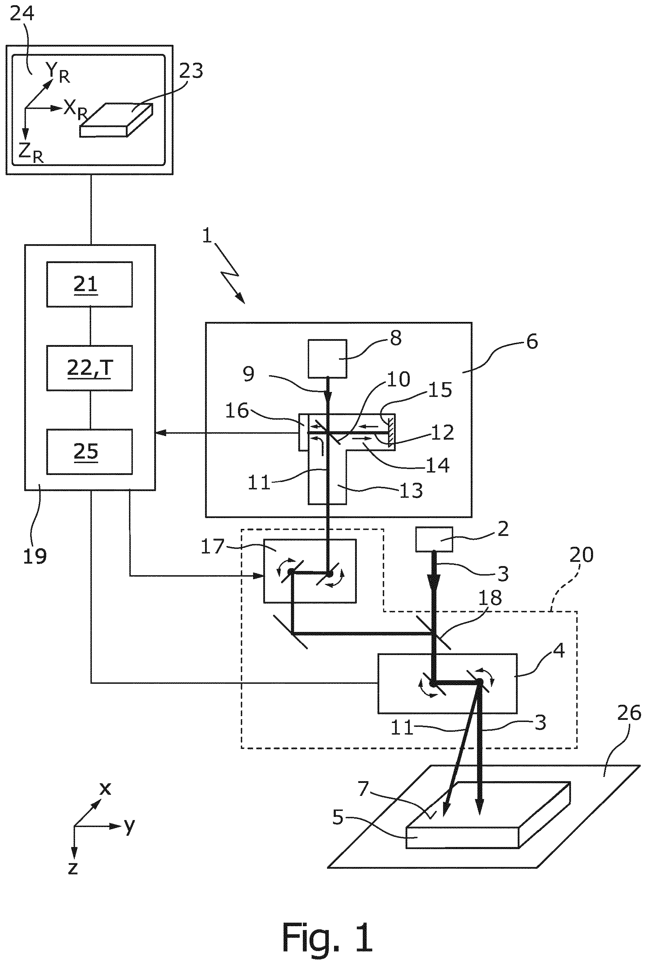

**Fig. 1** zeigt schematisch eine Laserbearbeitungsmaschine zum Durchführen des erfindungsgemäßen Verfahrens.

Die in Fig. 1 schematisch gezeigte Laserbearbeitungsmaschine **1** umfasst einen Laserstrahlerzeuger **2** zum Erzeugen eines Bearbeitungslaserstrahls **3**, einen Laserscanner **4** zum zweidimensionalen Ablenken des Bearbeitungslaserstrahls 3 in x-, y-Richtung auf einem Werkstück **5**, sowie einen optischen Kohärenztomographen (OCT) **6** zum optischen Abtasten eines Bereichs der Oberfläche 7 des Werkstücks 5. Der Laserscanner 4 kann beispielsweise einen um zwei Achsen ablenkbaren Scannerspiegel oder zwei jeweils um eine Achse ablenkbare Scannerspiegel aufweisen.

Der OCT 6 weist in bekannter Weise eine OCT-Lichtquelle (z.B.

Superlumineszenzdiode) **8** zur Erzeugung eines Lichtstrahls **9**, einen Strahlteiler **10** zum Aufteilen des Lichtstrahls 9 in einen OCT-Messstrahl **11** und einen Referenzstrahl **12** auf. Der OCT-Messstrahl 11 wird an einen Messarm **13** weitergeleitet und trifft auf die Werkstückoberfläche 7, an welcher der OCT-Messstrahl 11 zumindest teilweise reflektiert und an den in dieser Richtung undurchlässigen oder teildurchlässigen Strahlteiler 10 zurückgeführt wird. Der Referenzstrahl 12 wird an einen Referenzarm **14** weitergeleitet und am Ende des Referenzarms 14 von einem Spiegel **15** reflektiert. Der reflektierte Referenzstrahl wird ebenfalls an den Strahlteiler 10 zurückgeführt. Die Überlagerung der beiden reflektierten Strahlen wird schließlich von einem Detektor (OCT-Sensor) **16** detektiert, um unter Berücksichtigung der Länge des Referenzarms 14 Höheninformationen über die Werkstückoberfläche 7 und/oder die aktuelle Eindringtiefe des Bearbeitungslaserstrahls 3 in das Werkstück 5 zu ermitteln. Dieses Verfahren basiert auf dem Grundprinzip der Interferenz von Lichtwellen und ermöglicht es, Höhenunterschiede entlang der Messstrahlachse im Mikrometerbereich zu erfassen.

An den Messarm 13 schließt sich ein OCT-(Kleinfeld)Scanner **17** an, um den OCT-Messstrahl 11 auf der Werkstückoberfläche 7 zweidimensional, also in X-, Y-Richtung, abzulenken und so einen Bereich der Werkstückoberfläche 7 beispielsweise mit Linienscans abzuscannen. Der OCT-Scanner 17 kann beispielsweise einen um zwei Achsen ablenkbaren Scannerspiegel oder zwei jeweils um eine Achse ablenkbare Scannerspiegel aufweisen. Über einen Spiegel **18**, der im Strahlengang des Bearbeitungslaserstrahls 3 schräg angeordnet ist und für den Bearbeitungslaserstrahl 3 transmittierend und für den OCT-Messstrahl 11 reflektierend ist, wird der OCT-Messstrahl 11 in den Laserscanner 4 eingekoppelt, um den OCT-Messstrahl 11 auf das Werkstück 5 zu richten. Die Sensordaten des OCT-Sensors 16 werden an eine Maschinensteuerung **19** geleitet, die auch die Bewegung der Scanner 4, 17 steuert.

Wie in Fig. 1 gestrichelt angedeutet, sind der Laserscanner 4 und der OCT-Scanner 17 (ggf. auch der OCT 6) in einen bewegbaren Bearbeitungskopf **20** integriert, aus dem der Bearbeitungslaserstrahl 3 und der abgelenkte OCT-Messstrahl 11 austreten. Der Bearbeitungslaserstrahl 3 und der OCT-Messstrahl 11 können dem Bearbeitungskopf 3 über optische Fasern (nicht gezeigt) zugeführt werden. Die Bewegung des Bearbeitungskopfes 20 wird ebenfalls von der Maschinensteuerung 19 gesteuert.

Das Werkstück 5 und der Bearbeitungskopf 20 sind relativ zueinander bewegbar; hierfür sind entweder das Werkstück 5 oder der Bearbeitungskopf 20 oder beide bewegbar.

Die Maschinensteuerung 19 umfasst:
- eine Lagebestimmungseinheit **21** zum Bestimmen der Lage des zu bearbeitenden Werkstücks 5 im Arbeitsraum anhand von Abstandsmesswerten des optischen Kohärenztomographen 6,
- eine Ermittlungseinheit **22** zum Ermitteln einer Koordinatentransformation **T** zwischen der bestimmten Werkstücklage und der Lage eines CAD-(Null)Modells **23** des zu bearbeitenden Werkstücks 5 in einem CAD-Koordinatensystem **24**, (Referenzkoordinaten X_{R}, Y_{R}, Z_{R}) und
- eine Transformationseinheit **25** zum Transformieren einer für das CAD-Modell 23 im CAD-Koordinatensystem 24 programmierten Bearbeitungsbahn des Bearbeitungskopfes 20 auf die bestimmte Lage des zu bearbeitenden Werkstücks 5 (Realbauteil) mittels der ermittelten Koordinatentransformation T.

Zum Bearbeiten eines Werkstücks 5, dessen exakte Lage im Arbeitsraum (z.B. die exakte Lage auf einem Werkstücktisch **26**) nicht bekannt ist, mittels des Bearbeitungslaserstrahls 3 wird wie folgt vorgegangen.

Der Bearbeitungskopf 20, dessen Lage im Arbeitsraum bekannt ist, wird über dem Werkstücktisch 26 bzw. dem Werkstück 5 initial positioniert. Dann startet der erste Suchschritt, wobei der OCT-Messstrahl 11, dessen Lage relativ zum Bearbeitungskopf 20 ebenfalls bekannt ist, mittels des OCT-Scanners 17 durch das Sichtfeld-Volumen des OCT 6 bewegt wird. Im Fall, dass noch keine Bauteilgeometrie erfasst worden ist, wird der Bearbeitungskopf 20 bzw. der OCT 6 um eine feste Inkrement-Bewegung in Z-Richtung näher an den Werkstücktisch 26 bewegt. Der Vorgang wird automatisiert so lange wiederholt, bis das Werkstück 5 erfasst ist. Gegebenenfalls wird der Suchvorgang durch Bewegen des Bearbeitungskopfs 20 in der X-Y-Ebene ergänzt. Punkt für Punkt wird das OCT-Sichtfeld-Volumen gerastert und so das Werkstück 5, welches im Sichtfeld liegt, erkannt. Jedes positive Abstandsmessereignis entspricht einem Raumpunkt, welcher einem Punkt auf der Werkstückoberfläche 7 entspricht. Die Summe aller Bauteiloberflächenpunkte entspricht in ihrer Gesamtheit dem Werkstück 5. Anhand der Abstandsmesswerte bestimmt die Lagebestimmungseinheit 21 die Lage des zu bearbeitenden Werkstücks 5 im Arbeitsraum. Die Ermittlungseinheit 22 ermittelt die Koordinatentransformation T zwischen der bestimmten Werkstücklage und der Lage des CAD-Modells 23 im CAD-Koordinatensystem 24. Mittels der so ermittelten Koordinatentransformation T transformiert die Transformationseinheit 25 eine für das CAD-Modell 23 im CAD-Koordinatensystem 24 programmierte Bearbeitungsbahn des Bearbeitungskopfes 20 und eine Scannerbewegung des Laserscanners 4 auf die bestimmte Lage des zu bearbeitenden Werkstücks 5. Abschließend wird das Werkstücks 5 mittels des Laserbearbeitungsstrahls 3 bearbeitet, indem der Bearbeitungskopf 20 und der Laserbearbeitungsstrahl 3 entlang der transformierten Bearbeitungsbahn bewegt werden.

Alternativ oder zusätzlich zur beschriebenen Bestimmung der Werkstücklage im Arbeitsraum kann auch mindestens eines der folgenden Merkmale anhand von beim automatisierten Abtasten ermittelten Abstandsmesswerten des optischen Kohärenztomographen 6 bestimmt werden:
- das Vorhandensein eines zu bearbeitenden Werkstücks 5 im Arbeitsraum;
- das Vorhandensein des richtigen, zu bearbeitenden Werkstücks 5 im Arbeitsraum; und
- das Vorhandensein eines in einem vorherigen Bearbeitungsschritt am Werkstück 5 durchgeführten Bearbeitungsmerkmals des zu bearbeitenden Werkstücks 5.

## Patentansprüche

1. Verfahren zum Bearbeiten eines Werkstücks (5) mittels eines Bearbeitungsstrahls (3), der aus einem Bearbeitungskopf (20) austritt, wobei das Werkstück (5) und der Bearbeitungskopf (20) in einem Arbeitsraum relativ zueinander bewegbar sind,
**gekennzeichnet durch** folgende Schritte:
- automatisiertes Abtasten eines im Arbeitsraum angeordneten, zu bearbeitenden Werkstücks (5) mittels eines über den Bearbeitungskopf (20) geführten OCT-Messstrahls (11) eines optischen Kohärenztomographen (6), wobei die Lage des Bearbeitungskopfes (20) im Arbeitsraum sowie die Lage des OCT-Messstrahls (11) relativ zum Bearbeitungskopf (20) jeweils bekannt sind;
- Bestimmen mindestens eines der folgenden Merkmale anhand von beim automatisierten Abtasten ermittelten Abstandsmesswerten des optischen Kohärenztomographen (6):
- die Lage des zu bearbeitenden Werkstücks (5) im Arbeitsraum;
- das Vorhandensein eines zu bearbeitenden Werkstücks (5) im Arbeitsraum;
- das Vorhandensein des richtigen, zu bearbeitenden Werkstücks (5) im Arbeitsraum; und
- das Vorhandensein eines in einem vorherigen Bearbeitungsschritt am Werkstück (5) durchgeführten Bearbeitungsmerkmals des zu bearbeitenden Werkstücks (5).

2. Verfahren nach Anspruch 1, **dadurch gekennzeichnet, dass** der OCT-Messstrahl (11) ein- oder zweidimensional abgelenkt wird, um das Werkstück (5) mit dem OCT-Messstrahl (11) abzutasten.

3. Verfahren nach Anspruch 1 oder 2, **dadurch gekennzeichnet, dass** der Bearbeitungskopf (20) bewegt wird, um das Werkstück (5) mit dem OCT-Messstrahl (11) abzutasten.

4. Verfahren nach einem der vorhergehenden Ansprüche, **gekennzeichnet durch** folgende weitere Verfahrensschritte:
- Ermitteln einer Koordinatentransformation (T) zwischen der bestimmten Werkstücklage und der Lage eines CAD-Modells (23) des zu bearbeitenden Werkstücks (5) in einem CAD-Koordinatensystem (24);
- Transformieren einer für das CAD-Modell (23) im CAD-Koordinaten-system (24) programmierten Bearbeitungsbahn des Bearbeitungskopfes (20) und des Bearbeitungsstrahls (3) auf die bestimmte Lage des zu bearbeitenden Werkstücks (5) mittels der ermittelten Koordinatentransformation (T); und
- Bearbeiten des Werkstücks (5) mittels des Bearbeitungsstrahls (3) durch Bewegen des Bearbeitungskopfes (20) und des Bearbeitungsstrahls (3) relativ zueinander entlang der transformierten Bearbeitungsbahn.

5. Bearbeitungsmaschine (1) zum Bearbeiten eines Werkstücks (5) mittels eines Bearbeitungsstrahls (3), aufweisend:
- einen Bearbeitungsstrahlerzeuger (2) zum Erzeugen eines Bearbeitungsstrahls (3),
- einen optischen Kohärenztomographen (6) zum Erzeugen eines OCT-Messstrahls (11),
- einen OCT-Scanner (17) zum ein- oder zweidimensionalen Ablenken des OCT-Messstrahls (11),
- einen Bearbeitungskopf (20), aus dem der Bearbeitungsstrahl (3) und der abgelenkte OCT-Messstrahl (11) austreten,
und **gekennzeichnet durch**
- eine Maschinensteuerung (19) zum Steuern der Scannerbewegung des OCT-Scanners (17),
wobei die Maschinensteuerung (19) aufweist:
- eine Lagebestimmungseinheit (21) zum Bestimmen der Lage des zu bearbeitenden Werkstücks (5) im Arbeitsraum anhand von Abstandsmesswerten des optischen Kohärenztomographen (6),
- eine Ermittlungseinheit (22) zum Ermitteln einer Koordinatentransformation (T) zwischen der bestimmten Werkstücklage und der Lage eines CAD-Modells (23) des zu bearbeitenden Werkstücks (5) in einem CAD-Koordinatensystem (24),
- eine Transformationseinheit (25) zum Transformieren einer für das CAD-Modell (23) im CAD-Koordinatensystem (24) programmierten Bearbeitungsbahn des Bearbeitungskopfes (20) und des Bearbeitungsstrahls (3) auf die bestimmte Lage des zu bearbeitenden Werkstücks (5) mittels der ermittelten Koordinatentransformation (T),
und wobei die Maschinensteuerung (19) programmiert ist, das Verfahren nach einem der vorhergehenden Ansprüche auszuführen.

6. Bearbeitungsmaschine nach Anspruch 5, **dadurch gekennzeichnet, dass** der Bearbeitungskopf (20) bewegbar ist und die Maschinensteuerung (19) die Bewegung des Bearbeitungskopfes (20) steuert.

7. Bearbeitungsmaschine nach Anspruch 5 oder 6, **dadurch gekennzeichnet, dass** der OCT-Scanner (17) am Bearbeitungskopf (20) befestigt ist.

8. Bearbeitungsmaschine nach einem der Ansprüche 5 bis 7, **dadurch gekennzeichnet, dass** der optische Kohärenztomograph (6) am Bearbeitungskopf (20) befestigt ist.

9. Bearbeitungsmaschine nach einem der Ansprüche 5 bis 8, **dadurch gekennzeichnet, dass** der Bearbeitungsstrahl (3) ein Bearbeitungslaserstrahl ist.

10. Computerprogrammprodukt, welches Codemittel aufweist, die zum Durchführen aller Schritte des Verfahrens nach einem der Ansprüche 1 bis 4 angepasst sind, wenn das Programm auf der Maschinensteuerung (19) der Bearbeitungsmaschine (1) nach einem der Ansprüche 5 bis 9 abläuft.

## Claims

1. A method for processing a workpiece (5) by means of a processing beam (3) which emerges from a processing head (20), wherein the workpiece (5) and the processing head (20) can be moved relative to one another in a working space, **characterized by** the following steps:
- automated scanning of a workpiece (5) to be processed arranged in the working space by means of an OCT measuring beam (11) of an optical coherence tomograph (6) guided by means of the processing head (20), wherein the position of the processing head (20) in the working space and the position of the OCT measuring beam (11) relative to the processing head (20) are known in each case;
- determining at least one of the following features on the basis of distance measurement values of the optical coherence tomograph (6) determined during automated scanning:
- the position of the workpiece (5) to be processed in the working space;
- the presence of a workpiece (5) to be processed in the working space;
- the presence of the correct workpiece (5) to be processed in the working space; and
- the presence of a processing feature of the workpiece (5) to be processed that was performed on the workpiece (5) in a previous processing step.

2. The method according to claim 1, **characterized in that** the OCT measuring beam (11) is deflected in one or two dimensions in order to scan the workpiece (5) with the OCT measuring beam (11).

3. The method according to claim 1 or 2, **characterized in that** the processing head (20) is moved in order to scan the workpiece (5) with the OCT measuring beam (11).

4. The method according to one of the preceding claims, **characterized by** the following further process steps:
- determining a coordinate transformation (T) between the determined workpiece position and the position of a CAD model (23) of the workpiece (5) to be processed in a CAD coordinate system (24);
- transforming a processing path of the processing head (20) and the processing beam (3) programmed for the CAD model (23) in the CAD coordinate system (24) to the determined position of the workpiece (5) to be processed by means of the determined coordinate transformation (T); and
- processing the workpiece (5) by means of the processing beam (3) by moving the processing head (20) and the processing beam (3) relative to one another along the transformed processing path.

5. A processing machine (1) for processing a workpiece (5) by means of a processing beam (3), comprising:
- a processing beam generator (2) for generating a processing beam (3),
- an optical coherence tomograph (6) for generating an OCT measuring beam (11),
- an OCT scanner (17) for deflecting the OCT measuring beam (11) in one or two dimensions,
- a processing head (20), from which the processing beam (3) and the deflected OCT measuring beam (11) emerge,
and **characterized by**
- a machine control system (19) for controlling the scanner movement of the OCT scanner (17),
wherein the machine control system (19) has:
- a position determination unit (21) for determining the position of the workpiece (5) to be processed in the working space on the basis of distance measurement values of the optical coherence tomograph (6),
- a detection unit (22) for detecting a coordinate transformation (T) between the determined workpiece position and the position of a CAD model (23) of the workpiece (5) to be processed in a CAD coordinate system (24),
- a transformation unit (25) for transforming a processing path of the processing head (20) and the processing beam (3) programmed for the CAD model (23) in the CAD coordinate system (24) to the determined position of the workpiece (5) to be processed by means of the determined coordinate transformation (T),
and wherein the machine control system (19) is programmed to carry out the method according to any one of the preceding claims.

6. The processing machine according to claim 5, **characterized in that** the processing head (20) can be moved and the machine control system (19) controls the movement of the processing head (20).

7. The processing machine according to claim 5 or 6, **characterized in that** the OCT scanner (17) is fastened to the processing head (20).

8. The processing machine according to one of claims 5 to 7, **characterized in that** the optical coherence tomograph (6) is fastened to the processing head (20).

9. The processing machine according to one of claims 5 to 8, **characterized in that** the processing beam (3) is a processing laser beam.

10. A computer program product having code means adapted to carry out all the steps of the method as claimed in one of claims 1 to 4 when the program is executed on the machine control system (19) of the processing machine (1) according to one of the claims 5 to 9.

## Revendications

1. Procédé de traitement d'une pièce (5) au moyen d'un faisceau de traitement (3) sortant d'une tête de traitement (20), dans lequel la pièce (5) et la tête de traitement (20) peuvent être mobiles l'une par rapport à l'autre dans un espace de travail, **caractérisé par** les étapes suivantes :
- balayage automatisé d'une pièce (5) à traiter disposée dans l'espace de travail au moyen d'un faisceau de mesure OCT (11) d'un tomographe en cohérence optique (6) conduit par la tête de traitement (20), dans lequel le positionnement de la tête de traitement (20) dans l'espace de travail ainsi que le positionnement du faisceau de mesure OCT (11) par rapport à la tête de traitement (20) sont respectivement connus ;
- détermination d'au moins une des caractéristiques suivantes en fonction des valeurs de mesure de distance obtenues lors du balayage automatisé par le tomographe en cohérence optique (6) :
- le positionnement de la pièce (5) à traiter dans l'espace de travail ;
- la présence d'une pièce (5) à traiter dans l'espace de travail ;
- la présence de la bonne pièce (5) à traiter dans l'espace de travail ; et
- la présence d'une caractéristique de traitement de la pièce (5) à traiter exécutée sur la pièce (5) lors d'une étape de traitement précédente.

2. Procédé selon la revendication 1, **caractérisé en ce que** le faisceau de mesure OCT (11) est dévié de manière unidimensionnelle ou bidimensionnelle afin de balayer la pièce (5) avec le faisceau de mesure OCT (11).

3. Procédé selon la revendication 1 ou 2, **caractérisé en ce que** la tête de traitement (20) est déplacée pour balayer la pièce (5) avec le faisceau de mesure OCT (11).

4. Procédé selon l'une des revendications précédentes, **caractérisé par** les étapes de procédé supplémentaires suivantes :
- détermination d'une transformation de coordonnées (T) entre le positionnement déterminé de la pièce et le positionnement d'un modèle CAO (23) de la pièce (5) à traiter dans un système de coordonnées CAO (24) ;
- transformation de la trajectoire de traitement programmée de la tête de traitement (20) dans le système de coordonnées CAO (24) pour le modèle CAO (23) et du faisceau de traitement (3) au niveau du positionnement déterminé de la pièce (5) à traiter au moyen de la transformation de coordonnées (T) déterminée ; et
- traitement de la pièce (5) au moyen du faisceau de traitement (3) par le déplacement de la tête de traitement (20) et du faisceau de traitement (3) l'un par rapport à l'autre le long de la trajectoire de traitement transformée.

5. Machine de traitement (1) pour le traitement d'une pièce (5) au moyen d'un faisceau de traitement (3), comprenant :
- un générateur de faisceau de traitement (2) pour la génération d'un faisceau de traitement (3),
- un tomographe en cohérence optique (6) pour la génération d'un faisceau de mesure OCT (11),
- un scanner OCT (17) pour la déviation unidimensionnelle ou bidimensionnelle du faisceau de mesure OCT (11),
- une tête de traitement (20) à partir de laquelle sortent le faisceau de traitement (3) et le faisceau de mesure OCT (11) dévié,
et **caractérisée par**
- une commande de machine (19) pour commander le mouvement du scanner du scanner OCT (17),
dans laquelle la commande de machine (19) comprend :
- une unité de détermination de positionnement (21) pour la détermination du positionnement de la pièce (5) à traiter dans l'espace de travail en fonction des valeurs de mesure de distance du tomographe en cohérence optique (6),
- une unité d'estimation (22) pour l'estimation d'une transformation de coordonnées (T) entre le positionnement déterminé de la pièce et le positionnement d'un modèle CAO (23) de la pièce (5) à traiter dans un système de coordonnées CAO (24),
- une unité de transformation (25) pour la transformation d'une trajectoire de traitement programmée pour le modèle CAO (23) dans le système de coordonnées CAO (24) de la tête de traitement (20) et du faisceau de traitement (3) au niveau du positionnement déterminé de la pièce (5) à traiter au moyen de la transformation de coordonnées (T) déterminée,
et dans laquelle la commande de machine (19) est programmée pour exécuter le procédé selon l'une des revendications précédentes.

6. Machine de traitement selon la revendication 5, **caractérisée en ce que** la tête de traitement (20) peut être mobile et dans laquelle la commande de machine (19) commande le mouvement de la tête de traitement (20).

7. Machine de traitement selon la revendication 5 ou 6, **caractérisée en ce que** le scanner OCT (17) est fixé à la tête de traitement (20).

8. Machine de traitement selon l'une des revendications 5 à 7, **caractérisée en ce que** le tomographe en cohérence optique (6) est fixé à la tête de traitement (20).

9. Machine de traitement selon l'une des revendications 5 à 8, **caractérisée en ce que** le faisceau de traitement (3) est un faisceau laser de traitement.

10. Produit de programme informatique, lequel comprend des outils de codage qui sont adaptés à l'exécution de toutes les étapes du procédé selon l'une des revendications 1 à 4 lorsque le programme se déroule au niveau de la commande de machine (19) de la machine de traitement (1) selon l'une des revendications 5 à 9.
